# EUROPÄISCHE PATENTSCHRIFT

(11) **EP 0 708 817 B1**
(45) Veröffentlichungstag und Bekanntmachung des Hinweises auf die Patenterteilung: **18.03.1998**
(21) Anmeldenummer: 94922256.6
(22) Anmeldetag: 04.07.1994
(51) Int. Cl.: C11D 3/00, C11D 17/00, B01D 19/04

(54) **SCHÜTTFÄHIGES, PHOSPHATFREIES SCHAUMREGULIERUNGSMITTEL**
POURABLE PHOSPHATE-FREE FOAM-CONTROL AGENT
AGENT REGULATEUR DE MOUSSE COULANT, SANS PHOSPHATE

(30) Priorität: 13.07.1993 DE 4323410
(43) Veröffentlichungstag der Anmeldung: 01.05.1996
(73) Patentinhaber: Henkel Kommanditgesellschaft auf Aktien, 40191 Düsseldorf (DE)
(72) Erfinder: BLOCK, Christian, D-50668 Köln (DE); SEITER, Wolfgang, D-41469 Neuss (DE); SCHRECK, Berthold, D-40476 Düsseldorf (DE); HOLDERBAUM, Thomas, D-40789 Monheim (DE)
(86) Internationale Anmeldenummer: EP9402188
(87) Internationale Veröffentlichungsnummer: WO9502669

(56) Entgegenhaltungen:
- EP-A- 0 309 931
- WO-A-91/12306
- WO-A-92/20770
- DE-A- 3 436 194
- GB-A- 1 450 580

## Beschreibung

Die Erfindung betrifft ein körniges Schaumregulierungsmittel, enthaltend einen Entschäumerwirkstoff, ein festes Trägermaterial auf Alkalisulfatbasis und ein Celluloseether-Gemisch, sowie eine Verfahren zur Herstellung derartiger Schaumregulierungsmittel durch Sprühtrocknung.

Gegenstand der deutschen Offenlegungsschrift DE 23 38 468 ist ein Waschmittel mit einem Gehalt an einem Silikonentschäumer, der gegen Wechselwirkungen mit den Waschmittelbestandteilen geschützt ist. Zu seiner Herstellung werden wäßrige Schmelzen, die den Silikonentschäumer sowie eine Trägersubstanz, zum Beispiel Polyglykol, enthalten, zunächst sprühgetrocknet und die erhaltenen Partikel in einem fluidisierten Bett eines festen, wasserlöslichen Hüllmaterials mit einem Überzug versehen. Als Überzugsmaterial können übliche in Waschmitteln verwendete Salze, insbesondere Tripolyphosphat oder Carboxymethylcellulose verwendet werden. Ein solches mehrstufiges Herstellungsverfahren ist vergleichsweise technisch aufwendig. Außerdem ist der Phosphatgehalt unerwünscht.

Die deutsche Offenlegungsschrift DE 31 28 631 beschreibt die Herstellung von schaumgedämpften Waschmitteln mit einem Gehalt an Silikonentschäumern, die mikroverkapselt sind. Dabei wird das Silikon in einer wäßrigen Lösung eines filmbildenden Polymeren dispergiert und die Dispersion - getrennt von den übrigen in Wasser gelösten bzw. dispergierten Waschmittelbestandteilen - über eine besondere Leitung der Sprühtrocknungsanlage zugeführt. Die Vereinigung der beiden Teilströme erfolgt im Bereich der Sprühdüse. Als filmbildende Polymere kommen zum Beispiel Celluloseether, Stärkeether oder synthetische wasserlösliche Polymere sowie deren Gemische in Frage. Die Bildung der Mikrokapseln erfolgt spontan in der Sprühdüse oder durch vorheriges Ausfällen durch Zugabe von Elektrolytsalzen zur Silikondispersion. Das beschriebene Verfahren ist zwangsläufig an die Herstellung sprühgetrockneter Waschmittel gebunden. Eine Übertragung auf anderweitig, zum Beispiel durch Granulierung hergestellte Wasch- und Reinigungsmittel oder auch auf andere Einsatzgebiete, ist bei dieser Arbeitsweise nicht möglich.

Die internationale Patentanmeldung WO-A1-92/20770 offenbart granulare Entschäumerzubereitungen, die 60-90 Gew.-% phosphatfreies Trägersalzgemisch, 0,5-4 Gew.-% Celluloseether und 5-30 Gew.-% flüssiges Organopolysiloxan enthalten und mit Hilfe eines speziellen Granulationsverfahrens hergestellt werden.

Die europäische Patentanmeldung EP-A2-0 309 913 betrifft rieselfähige Schaumregulierungsmittel, die aus einem wasserlöslichen, tensidfreien Trägermaterial und einem daran adsorbierten Gemisch von Paraffinen mit von C₂₋₇-Diaminen und gesättigten C₁₂₋₂₂-Fettsäuren ableitbaren Bisamiden bestehen.

Aus der britischen Patentschrift GB 1 450 580 sind pulverförmige beziehungsweise granulare Waschmittel bekannt, welche als schaumregulierende Komponente feinteiligen Feststoff (Natriumsulfat, Natriumzitrat oder Zitronensäure) mit an dessen Oberfläche befindlichem Silikon-Entschäumerwirkstoff enthalten.

Die europäische Patentanmeldung EP 097 867 beschreibt ein Verfahren zur Herstellung mikroverkapselter Entschäumeröle durch Mischen einer Silikonemulsion mit einer wäßrigen Lösung von Carboxymethylcellulose und Ausfällen der Mikrokapseln durch Zusatz von Elektrolyten, insbesondere mehrwertiger Salze oder organischer Lösungsmittel. Es hat sich gezeigt, daß die Herstellung der Silikondispersion die Anwesenheit von emulgierend wirkenden, nichtionischen Tensiden erfordert. Dieser Zusatz führt jedoch zu einem deutlichen Rückgang an Entschäumerwirkung. Außerdem bereitet es erhebliche Schwierigkeiten, die für eine ausreichende Schaumdämpfung erforderlichen geringen Mengen an Silikon-Mikrokapseln in einer vergleichsweise großen Waschpulvermenge homogen zu verteilen. Zusätzlich wird der kontinuierliche Mischprozeß durch eine elektrostatische Aufladung der Partikel in den Transport- und Dosierungsvorrichtungen erschwert.

Die deutsche Offenlegungsschrift DE 34 36 194 beschreibt ein Verfahren zur Herstellung eines schüttfähigen Entschäumergranulats durch Sprühtrocknen einer wäßrigen, filmbildende Polymere enthaltenden Entschäumerdispersion. Zwecks Herstellung eines Granulates der Zusammensetzung 1 bis 10 Gew.-% wasserunlöslicher Entschäumerwirkstoff, 0,2 bis 2 Gew.-% eines Gemisches aus Natriumcarboxymethylcellulose und Methylcellulose im Gewichtsverhältnis 80 : 20 bis 40 : 60, 70 bis 90 Gew.-% an anorganischen, in Wasser löslichen oder dispergierbaren Trägersalzen, Rest Wasser, läßt man eine 0,5 bis 8 Gew.-% des Celluloseethergemisches enthaltende wäßrige Lösung bei einer Temperatur von 15 bis 60 °C so lange quellen, bis die Viskosität der Lösung mindestens 75 % der Viskosität beträgt, die bei vollständiger Quellung der Celluloseether-Lösung gemessen wird, worauf man in dieser Lösung den Entschäumerwirkstoff dispergiert und nach Zusatz der Trägersalze und gegebenenfalls Wasser die homogenisierte Dispersion sprühtrocknet.

Als Entschäumerwirkstoffe werden Organopolysiloxane, Paraffine sowie Gemische aus Organopolysiloxanen und Paraffinen eingesetzt. Der Entschäumerwirkstoffgehalt beträgt 1 bis 10 Gew.-%, vorzugsweise 3 bis 7 Gew.-%. Das Trägersalz besteht vorzugsweise aus einem Gemisch von Natriumsilikat, Natriumtripolyphosphat und Natriumsulfat. Das im Beispiel beschriebene Mittel enthält neben anderen Inhaltsstoffen 5,5 Gew.% eines Silikonentschäumerwirkstoffs, 31,5 Gew.-% Natriumtripolyphosphat und 10,5 Gew.-% Natriumsilikat.

Es hat sich nun gezeigt, daß die in DE 34 36 194 beschriebenen Mittel hinsichtlich ihrer Entschäumerwirkung und Umweltverträglichkeit erheblich verbessert werden können, wenn man nach der Lehre der nachfolgend geschilderten Erfindung arbeitet.

Ausgehend von der Lehre der DE 34 36 194 bestand zunächst die Aufgabe, das Tripolyphosphat im Trägersalz durch P-freie Salze zu ersetzen. Dabei zeigte sich jedoch, daß ein Ersatz durch Natriumsulfat und/oder Natriumsilikat sich insbesondere dann nachteilig auswirkt, wenn höhere Anteile, beispielsweise 8 Gew.-% und mehr, an Entschäumerwirkstoff eingearbeitet werden soll. Andererseits hat sich gezeigt, daB mit wachsendem Anteil an Polysiloxan-Entschäumern im Granulat deren Wirkung bei der späteren Anwendung überproportional ansteigt. Die erforderlichen Mengen an Polysiloxanen können daher ohne EinbuBe an Entschäumerwirkung deutlich reduziert werden, wenn man Granulate mit relativ hohem Anteil an adsorbierten Polysiloxan-Entschäumern verwendet.

Aus der internationalen Patentanmeldung WO 91/12306 sind schüttfähige Entschäumergranulate bekannt, die 7,5 bis 18 Gew.-% eines wasserunlöslichen Entschäumerwirkstoffe aus der Klasse der Organopolysiloxane mit einem Gehalt an feinteiliger Kieselsäure sowie dessen Gemische mit Paraffinöl und/ oder Paraffinwachs, 0,2 bis 3 Gew.-% eines Gemisches aus Natriumcarboxymethylcellulose und Methylcellulose im Gewichtsverhältnis 80 : 20 bis 40 : 60, 70 bis 90 Gew.-% an anorganischen, in Wasser löslichen oder dispergierbaren phosphatfreien Trägersalzen in Form von Gemischen aus Natriumsilikat, Natriumcarbonat und Natriumsulfat, und Rest auf 100 Gew.-% Wasser enthält. Diese Entschäumergranulate werden durch Sprühtrocknung hergestellt, wobei man eine 2 bis 8 Gew.-% des Celluloseethergemisches enthaltende wäßrige Lösung bei einer Temperatur von 15 bis 60 °C so lange quellen läßt, bis die Viskosität der Lösung mindestens 60 % der Viskosität beträgt, die bei vollständiger Quellung der Celluloseether-Lösung gemessen wird, in dieser Lösung den Entschäumerwirkstoff dispergiert und nach Zusatz der Trägersalze und gegebenenfalls Wasser die homogenisierte Dispersion sprühtrocknet. Die so aufgebauten Entschäumergranulate weisen im Vergleich zu den phosphathaltigen Präparaten gemäß DE 34 36 194 etwa die doppelte Entschäumerleistung auf.

Überraschenderweise wurde nun gefunden, daß die Entschäumerleistung und auch die Lagerstabilität der aus WO 91/12306 bekannten Entschäumergranulate durch Optimierung der Zusammensetzung des anorganischen Trägermaterials weiter verbessert werden kann. Die nachfolgend beschriebene Erfindung ermöglicht die Herstellung gut rieselfähiger, lagerstabiler Entschäumergranulate mit hohem Wirkstoffgehalt und verbesserter Entschäumerwirkung bezogen auf die Menge des beim Gebrauch eingesetzten Entschäumers.

Gegenstand der Erfindung ist somit ein schüttfähiges Entschäumergranulat, das 7,5 Gew.-% bis 18 Gew.-% eines wasserunlöslichen Entschäumerwirkstoffs, 0,2 Gew.-% bis 3 Gew.-% eines Gemisches aus Natriumcarboxymethylcellulose und nichtionischem Celluloseether im Gewichtsverhältnis 80 : 20 bis 40 : 60, 70 Gew.-% bis 90 Gew.-% an anorganischem, phosphatfreiem, was-serlöslichem Trägersalz, und Wasser auf 100 Gew.-% enthält, wobei das anorganische Trägersalz zu 0 Gew.-% bis 5 Gew.-%, vorzugsweise bis 2 Gew.-%, insbesondere bis zu 1 Gew.-%, aus Alkalisilikat, insbesondere Natriumsilikat, und zu 98 Gew.-% bis 100 Gew.-%, aus Alkalisulfat besteht.

Als Entschäumerwirkstoffe kommen übliche Organopolysiloxane mit einem Gehalt an feinteiliger Kieselsäure, die auch silaniert sein kann, in Frage. Der Gehalt derartiger an sich bekannter Entschäumerwirkstoffe an Kieselsäure beziehungsweise silanierter, sogenannter hydrophobierter Kieselsäure beträgt üblicherweise 0,5 bis 10 Gew.-%, meist 1 bis 6 Gew.-%.

Unter hydrophobierter Kieselsäure wird in aller Regel durch Behandeln von feinteiliger, durch Fällung aus Silikatlösungen oder pyrogene Zersetzung von Siliziumhalogeniden hergestellter Kieselsäuren mit Organohalogensilanen erhaltene Kieselsäure verstanden, wie sie beispielsweise in den US-amerikanischen Patentschriften US 3 207 698 oder US 3 388 073 beschrieben wird. Auch durch das Fixieren von Organopolysiloxanen, beispielsweise Polydimethylsiloxan, an feinteiliges Siliziumdioxid, wie beispielsweise aus der US-amerikanischen Patentschrift US 3 235 509 bekannt, können hydrophobierte Kieselsäuren erhalten werden. Als weiteres Beispiel sei mit Dimethyldichlorsilan, Trimethylchlorsilan, Hexamethyldisilazan oder Chlormethan umgesetztes pyrogenes Siliciumdioxid genannt. Die hydrophobierten Kieselsäure-Partikel weisen normalerweise durchschnittliche Primärteilchengrößen von 5 µm bis 50 um bei spezifischen Oberflächen von 100 m²/g bis 300 m²/g auf. Die zur Hydrophobierung der Kieselsäure notwendigen Mengen an Hydrophobierungsmittel, insbesondere Silan beziehungsweise Siloxan, sind äußerst klein, sie betragen normalerweise nicht mehr als etwa 5 Gew.-% der Kieselsäuremenge.

Geeignete Entschäumerwirkstoffe sind ferner Paraffine, wie Paraffinöle, Weich- und Hartparaffine und mikrokristalline Paraffinwachse. Derartige Paraffine stellen im allgemeinen komplexe Stoffgemische ohne scharfen Schmelzpunkt dar. Zur Charakterisierung bestimmt man üblicherweise den Schmelzbereich durch Differential-Thermo-Analyse (DTA), wie in "The Analyst" 87 (1962), 420, beschrieben, und/oder den Erstarrungspunkt. Darunter versteht man die Temperatur, bei der das Paraffin durch langsames Abkühlen aus dem flüssigen in den festen Zustand übergeht. Bei Raumtemperatur vollständig flüssige Paraffine, das heißt solche mit einem Erstarrungspunkt unter 25 °C, sind erfindungsgemäß nicht brauchbar. Vorzugsweise werden Paraffinwachse verwendet, die im Bereich von 30 °C bis 90 °C erstarren. Dabei ist zu beachten, daß auch bei Raumtemperatur fest erscheinende Paraffinwachsgemische unterschiedliche Anteile an flüssigem Paraffin enthalten können. Bei den erfindungsgemäß bevorzugten Paraffinwachsen liegt dieser Flüssiganteil so niedrig wie möglich und fehlt vorzugsweise ganz. So weisen bevorzugte Paraffinwachsgemische bei 30 °C einen Flüssiganteil von unter 10 Gew.-%, insbesondere von 2 Gew.-% bis 5 Gew.-%, bei 40 °C einen Flüssiganteil von unter 30 Gew.-%, vorzugsweise von 5 Gew.-% bis 25 Gew.-% und insbesondere von 5 Gew.-% bis 15 Gew.-%, bei 60 °C einen Flüssiganteil von 30 Gew.-% bis 60 Gew.-%, insbesondere von 40 Gew.-% bis 55 Gew.-%, bei 80 °C einen Flüssiganteil von 80 Gew.-% bis 100 Gew.-%, und bei 90 °C einen Flüssiganteil von 100 Gew.-% auf. Die Temperatur, bei der ein Flüssiganteil von 100 Gew.-% des Paraffinwachses erreicht wird, liegt bei besonders bevorzugten Paraffinwachsgemischen noch unter 85 °C, insbesondere bei 75 °C bis 82 °C. Zu diesen besonders bevorzugten Paraffinwachsen gehören beispielsweise Lunaflex^{(R)} 902 der Firma Fuller sowie Deawax^{(R)} DEW 5419 der DEA Mineralöl AG.

Die Paraffine können ebenfalls, wie oben für Silikone beschrieben, Kieselsäure in den genannten Mengen enthalten. Vorzugsweise enthalten sie jedoch Bisamide, die sich von gesättigten Fettsäuren mit 12 bis 22, vorzugsweise 14 bis 18 C-Atomen sowie von Alkylendiaminen mit 2 bis 7 C-Atomen ableiten. Geeignete Fettsäuren sind Laurin-, Myristin-, Stearin-, Arachin- und Behensäure sowie deren Gemische, wie sie aus natürlichen Fetten beziehungsweise gehärteten Ölen, wie Talg oder hydriertem Palmöl, erhältlich sind. Geeignete Diamine sind beispielsweise Ethylendiamin, 1,3-Propylendiamin, Tetramethylendiamin, Pentamethylendiamin, Hexamethylendiamin, p-Phenylendiamin und Toluylendiamin. Bevorzugte Diamine sind Ethylendiamin und Hexamethylendiamin. Besonders bevorzugte Bisamide sind Bis-myristoyl-ethylendiamin, Bis-palmitoyl-ethylendiamin, Bis-stearoyl-ethylendiamin und deren Gemische sowie die entsprechenden Derivate des Hexamethylendiamins. Die Bisamide liegen vorzugsweise, wie in EP-A-309 931 beschrieben, in feinverteilter Form vor und weisen insbesondere eine mittlere Korngröße von weniger als 50 µm auf. Vorzugsweise liegt die maximale Korngröße der Partikel unter 20 µm, wobei mindestens 50 %, insbesondere mindestens 75 % der Partikel kleiner als 10 µm sind. Diese Angaben hinsichtlich der Partikelgröße beziehen sich auf die bekannte Bestimmungsmethode mit dem "Coulter Counter". Bezogen auf Paraffin beträgt der Gehalt an derartigen Fettsäurebisamiden vorzugsweise 2 Gew.-% bis 30 Gew.-%, insbesondere 5 Gew.-% bis 20 Gew.-%.

Gewünschtenfalls können auch Mischungen der genannten Entschäumerwirkstoffe eingesetze werden. Besonders bevorzugte Entschäumer sind kieselsäurehaltige Dimethylpolysiloxane sowie deren Gemische mit Paraffinwachsen einschließlich Mikroparaffinwachsen. In derartigen Gemischen beträgt der Anteil der kieselsäurehaltigen Polydimethylsiloxane vorzugsweise mindestens 30 Gew.-%, insbesondere mindestens 50 Gew.-%. Der Anteil des Entschäumerwirkstoffs beträgt 7,5 Gew.-% bis 18 Gew.-%, vorzugsweise 8 Gew.-% bis 16 Gew.-% und insbesondere 10 Gew.-% bis 15 Gew.-%, bezogen auf das Schaumregulierungsgranulat.

Weiterhin ist im Entschäumergranulat ein Gemisch von Carboxymethylcellulose-Alkalisalz, insbesondere Natriumsalz, und mindestens einem nichtionischen Celluloseether im Gewichtsverhältnis 80 : 20 bis 40 : 60, vorzugsweise 75 : 25 bis 60 : 40 und insbesondere 73 : 27 bis 68 : 32 enthalten. Diese Mischungsverhältnisse haben sich als für die Stabilität der wäßrigen, zur Sprühtrocknung bestimmten Entschäumerdispersion als besonders günstig erwiesen. Die Carboxymethylcellulose weist üblicherweise einen Substitutionsgrad von 0,5 bis 0,8 Carboxymethylgruppen pro Anhydroglucoseeinheit auf. Geeignete Verbindungen aus der Klasse der nichtionischen Celluloseether sind Methylcellulose, Ethylcellulose und Mischether wie Methylhydroxyethylcellulose, Methylhydroxypropylcellulose, Methylhydroxybutylcellulose und Ethylhydroxyethylcellulose. Bevorzugt wird Methylcellulose, Methylhydroxyethylcellulose oder Methylhydroxypropylcellulose in Kombination mit Carboxymethylcellulose verwendet. Die Methylcellulose weist normalerweise einen Substitutionsgrad von 1,2 bis 2 Methylgruppen pro Anhydroglucoseeinheit auf. Die Methylhydroxyethylcellulose beziehungsweise Methylhydroxypropylcellulose enthält in der Regel 0,5 bis 2 Methylgruppen und 0,05 bis 0,8 Hydroxyethyl beziehungsweise Hydroxypropylgruppen pro Anhydroglucoseeinheit.

Das Celluloseethergemisch wird in Wasser vorgequollen, bevor die Zugabe des Entschäumerwirkstoffs erfolgt. Die vollständige Quellung der wäßrigen Celluloseether-Lösung nimmt, wie aus WO-A-91/12306 bekannt, bei 20 °C etwa 15 bis 24 Stunden, bei 40 °C etwa 1,5 bis 4 Stunden in Anspruch. Die Quellung soll vor Zugabe des Entschäumerwirkstoffes soweit fortgeschritten sein, daß dieser Endzustand, erkennbar an einem Viskositätsmaximum, mindestens zu 65 %, insbesondere mindestens zu 80 %, erreicht ist. Bei einer Lösungstemperatur von 20 °C kann die Zugabe des Entschäumers nach 12 bis 24 Stunden, bei einer Lösungstemperatur von 40 °C nach 1 bis 3 Stunden erfolgen. Eine spätere Zugabe verbessert die Dispersionsstabilität nicht oder nur noch unwesentlich.

Die Konzentration der wäßrigen Celluloseetherlösung beträgt zweckmäßigerweise 2 Gew.-% bis 8 Gew.-%, vorzugsweise 3 Gew.-% bis 6 Gew.-%.

Das anorganische Trägermaterial im erfindungsgemäßen Entschäumergranulat besteht zu mindestens 95 Gew.-%, vorteilhafterweise zu. mindestens 98 Gew.-%, insbesondere zu mindestens 99 Gew.-% und vorzugsweise vollständig aus Alkalisulfat, insbesondere Lithiumsulfat, Natriumsulfat, Kaliumsulfat, Rubidiumsulfat oder deren Mischungen, vorzugsweise aus Natriumsulfat. Die angegebenen Gehalte beziehen sich stets auf den Gehalt an wasserfreiem Salz. In Mengen bis zu 5 Gew.-%, vorzugsweise bis zu 2 Gew.-%, insbesondere nicht über 1 Gew.-%, jeweils bezogen auf gesamtes anorganisches Trägersalz, kann Alkalisilikat, insbesondere Natriumsilikat, vorzugsweise mit Molverhältnissen von Alkalioxid zu Siliziumdioxid im Bereich von 1:2 bis 1:3,5, enthalten sein, was zur Verbesserung der Kornstabilität des erfindungsgemäßen Entschäumergranulats beitragen kann. Vorzugsweise ist Alkalisilikat jedoch völlig abwesend. Der Anteil an Trägersalz im erfindungsgemäßen Entschäumergranulat beträgt 70 Gew.-% bis 90 Gew.-%, vorzugsweise 72 Gew.-% bis 88 Gew.-% und insbesondere 75 Gew.-% bis 85 Gew.-%.

Die Herstellung der Entschäumergranulate erfolgt vorzugsweise durch Sprühtrocknen einer wäßrigen Dispersion, welche das vorgequollene Celluloseethergemisch, den Entschäumerwirkstoff und das Trägersalz enthält. Das Dispergieren des Entschäumerwirkstoffs erfolgt dabei zweckmäßigerweise mit Hilfe wirksamer Rühr- und Mischvorrichtungen, um Entmischungstendenzen aufgrund der hohen Salzkonzentrationen vorzubeugen. Es hat sich ferner als zwecksmäßig erwiesen, die Dispersion auf Temperaturen von 50 °C bis 95 °C zu erwärmen. Insbesondere beim Einsatz von Paraffinwachsen als Entschäumerwirkstoffe sollte die Temperatur mindestens 70 °C betragen. Das Erwärmen der Dispersion führt zu einer Viskositätserniedrigung und erleichtert die Weiterverarbeitung.

Die erwärmte, homogenisierte Dispersion weist üblicherweise einen Wassergehalt von 40 Gew.-% bis 50 Gew.-%, vorzugsweise von 45 Gew.-% bis 48 Gew.-% auf. Sie wird unter ständigem Homogenisieren, was beispielsweise durch Umpumpen über eine Ringleitung mit zwischengeschaltetem Homogenisator erfolgen kann, einer üblichen Sprühtrocknungsanlage zugeführt und mittels Düsen in einen Fallraum versprüht, der von heißen Trocknungsgasen durchströmt wird. Die Temperatur des vorzugsweise im Gegenstrom geführten Trocknungsgases beträgt im Turmeingangsbereich, dem sogenannten Ringkanal, üblicherweise 160 bis 280 °C und in der Abluftleitung vor Eintritt in das Staubfilter üblicherweise 70 bis 110 °C.

Der Trocknungsgrad wird so eingestellt, daß der Wassergehalt unter Einschluß des Hydratwassers im allgemeinen 3 Gew.-% bis 10 Gew.-%, vorzugsweise 3,5 Gew.-% bis 7,5 Gew.-% beträgt.

Das so erhältliche Granulat weist ein Schüttgewicht von 650 bis 800 g/l sowie ein Kornspektrum auf, das im Bereich üblicher granulierter oder sprühgetrockneter Waschmittel liegt. Die Schütt- und Rieseleigenschaften des Mittels sind bei den angegebenen Wassergehalten sehr gut. Das Zumischen zu körnigen Waschmitteln ist problemlos möglich, ein Entmischen beim Transport beziehungsweise der Lagerung der Aufmischungen tritt nicht ein. Die schaumdämpfenden Eigenschaften des Entschäumers bleiben während des Verarbeitungsprozesses wie auch bei einer Lagerung voll erhalten, weshalb man mit sehr geringen Entschäumermengen auskommt. Die Löslichkeit der Verfahrensprodukte in kaltem und warmem Wasser liegt in der Größenordnung üblicher körniger Waschmittelgemische, weshalb es beim Gebrauch der Mittel nicht zu einer Verzögerung der Inhibitorwirkung kommt.

Außer in Wasch- und Reinigungsmitteln lassen sich die Granulate auch für andere Einsatzgebiete verwenden, zum Beispiel zur Entschäumung von Pülpen, Abwässern, Ölemulsionen, Färbelösungen sowie in der chemischen Verfahrenstechnik.

### Beispiele

In Anlehnung an das in WO-A-91/12306 beschriebene Verfahren wurde eine wäßrige Lösung, enthaltend 4,6 Gew.-% Celluloseether (Gewichtsverhältnis NaCarboxymethylcellulose : Methylcellulose = 70 : 30) quellen gelassen, bis die Viskosität der Lösung mehr als 90 % der erreichbaren Endviskosität betrug, ein Polysiloxan-Entschäumerwirkstoff (Polydimethylsiloxan mit mikrofeiner hydrophobierter Kieselsäure, Viskosität 30 000 mPa.s) wurde darin dispergiert, die Dispersion wurde nach Erwärmen auf 60 °C mit einer ebenfalls auf 60 °C erwärmten Natriumsulfatlösung vermischt und unter ständigem Homogenisieren unter einem Druck von 40 bar über Düsen in einen Sprühturm zerstäubt und mittels heißer, im Gegenstrom geführter Verbrennungsgase (Temperatur im Ringkanal 250 °C, im Turmaustritt 98 °C) getrocknet. Man erhielt ein erfindungsgemäßes Endprodukt **E1** der in Tabelle 1 angegebenen Zusammensetzung. Zum Vergleich wurde ein alkalisulfatfreies Produkt **V1** durch Ersatz der Natriumsulfatlösung durch eine Natriumsilikatlösung und ein Produkt **V2** gemäß WO-A-91/12306 auf die gleiche Weise hergestellt.

**Tabelle 1:**

| Zusammensetzung der Entschäumergranulate [Gew.-%] | | | |
|---|---|---|---|
| Entschäumergranulat | **E1** | **V1** | **V2** |
| Entschäumerwirkstoff | 10 | 10 | 10 |
| Celluloseethergemisch | 1 | 1 | 1 |
| Na-Sulfat | 83,6 | - | 38,3 |
| Na-Silikat | - | 71,1 | 10 |
| Na-Carbonat | - | - | 35 |
| Wasser | 5,4 | 17,9 | 5,7 |

Die Korngröße der Sprühprodukte lag zwischen 0,1 und 1,2 mm bei einem Maximum von 0,5 bis 0,7 mm. Das Litergewicht von **E1** betrug 700 g/l. Das Produkt war sehr gut rieselfähig und nichtstaubend.

Nach Zumischen zu einem schaumregulatorfreien Pulverwaschmittel (sprühgetrocknetes Pulverprodukt, thermisch nicht belastbare Inhaltsstoffe anschließend zugemischt) der Zusammensetzung 8 Gew.-% Na-Alkylbenzolsulfonat, 3,5 Gew.-% Fettalkylpolyethoxylat, 1,5 Gew.-% Seife, 10 Gew.-% Na-Carbonat, 20 Gew.-% Zeolith, 3 Gew.-% Na-Silikat, 20 Gew.-%,Na-Perborat, 2 Gew.-% TAED, 0,5 Gew.-% Protease, Rest auf 100 Gew.-% Na-Sulfat und Wasser (1,7 Gewichtsteile Entschäumergranulat auf 98,3 Gewichtsteile Waschmittel) erhielt man bei dem Einsatz in einer Trommelwaschmaschine (Miele W717, 3,5 kg saubere Wäsche, Waschmitteldosierung 135 g, Wasserhärte 3 °d) die in Tabelle 2 angegebenen Schaumnoten auf der Skala von 0 bis 6 (0 = kein Schaum, 5 = Schauglas der Maschine vollständig mit Schaum gefüllt, 6 = Überschäumen).

**Tabelle 2:**

| Schaumregulatorleistung | | | |
|---|---|---|---|
| Waschtemperatur | Schaumnote | | |
| | **E1** | **V1** | **V2** |
| 20 °C | 1 | 6 | 5 |
| 40 °C | 0 | 5 | 2 |
| 90 °C | 1 | 5 | 1 |

Man erkennt, daß das erfindungsgemäße Entschäumergranulat **E1** dem Granulat des Standes der Technik (**V2**) bei niedrigen Waschtemperaturen deutlich überlegen ist und bei hoher Temperatur diesem zumindest gleichkommt. Das erfindungsgemäße Granulat **E1** ist einem Mittel **V1**, das man wie **E1** aus dem Stand der Technik durch Weglassen zweier Trägersalzkomponenten erhält, bei allen Temperaturen weit überlegen.

## Patentansprüche

1. Schüttfähiges Entschäumergranulat, das 7,5 Gew.-% bis 18 Gew.-% eines wasserunlöslichen Entschäumerwirkstoffs, 0,2 Gew.-% bis 3 Gew.-% eines Gemisches aus Alkalicarboxymethylcellulose und nichtionischem Celluloseether im Gewichtsverhältnis 80 : 20 bis 40 : 60, 70 Gew.-% bis 90 Gew.-% an anorganischem, phosphatfreiem, wasserlöslichem Trägersalz, und Wasser auf 100 Gew.-% enthält, dadurch gekennzeichnet, daß das anorganische Trägersalz zu 0 Gew.-% bis 5 Gew.-% aus Alkalisilikat, insbesondere Natriumsilikat, und zu 95 Gew.-% bis 100 Gew.-% aus Alkalisulfat, insbesondere Natriumsulfat besteht.

2. Entschäumergranulat nach Anspruch 1, dadurch gekennzeichnet, daß der Entschäumerwirkstoff ein Organopolysiloxan, ein Paraffin oder ein Gemisch aus diesen ist.

3. Entschäumergranulat nach Anspruch 1 oder 2, dadurch gekennzeichnet, daß der Entschäumerwirkstoff ein Organopolysiloxan mit einem Gehalt an hydrophobierter Kieselsäure enthält.

4. Entschäumergranulat nach Anspruch 1 oder 2, dadurch gekennzeichnet, daß der Entschäumerwirkstoff ein Paraffin mit einem Gehalt an 2 Gew.-% bis 30 Gew.-%, insbesondere 5 Gew.-% bis 20 Gew.-%, bezogen auf Paraffin, Fettsäurebisamid enthält.

5. Entschäumergranulat nach Anspruch 4, dadurch gekennzeichnet, daß das Paraffin einen Erstarrungspunkt im Bereich von 30 °C bis 90 °C besitzt.

6. Entschäumergranulat nach Anspruch 4 oder 5, dadurch gekennzeichnet, daß das Paraffin bei 30 °C einen Flüssiganteil von unter 10 Gew.-%, insbesondere von 2 Gew.-% bis 5 Gew.-%, bei 40 °C einen Flüssiganteil von unter 30 Gew.-%, insbesondere von 5 Gew.-% bis 25 Gew.-%, bei 60 °C einen Flüssiganteil von 30 Gew.-% bis 60 Gew.-%, insbesondere von 40 Gew.-% bis 55 Gew.-%, bei 80 °C einen Flüssiganteil von 80 Gew.-% bis 100 Gew.-%, und bei 90 °C einen Flüssiganteil von 100 Gew.-% aufweist.

7. Entschäumergranulat nach einem der Ansprüche 1 bis 6, dadurch gekennzeichnet, daß der Gehalt an Entschäumerwirkstoff 8.Gew.-% bis 16 Gew.-%, insbesondere 10 Gew.-% bis 15 Gew.-% beträgt.

8. Entschäumergranulat nach einem der Ansprüche 1 bis 6, dadurch gekennzeichnet, daß der Gehalt an Trägermaterial 72 Gew.-% bis 88 Gew.-% und insbesondere 75 Gew.-% bis 85 Gew.-% beträgt.

9. Entschäumergranulat nach einem der Ansprüche 1 bis 8, dadurch gekennzeichnet, daß das anorganische Trägersalz aus Alkalisulfat besteht.

10. Verfahren zur Herstellung eines schüttfähigen Entschäumergranulats, enthaltend 7,5 Gew.-% bis 18 Gew.-% wasserunlöslichen Entschäumerwirkstoff, 0,2 Gew.-% bis 3 Gew.-% eines Gemisches aus Alkalicarboxymethylcellulose und nichtionischem Celluloseether im Gewichtsverhältnis 80 : 20 bis 40 : 60, 70 bis 90 Gew.-% an anorganischem, phosphatfreiem wasserlöslichem Trägersalz, Rest Wasser, wobei man eine 2 bis 8 Gew.-% des Celluloseethergemisches enthaltende wäßrige Lösung bei einer Temperatur von 15 °C bis 60 °C so lange quellen läßt, bis die Viskosität der Lösung mindestens 60 % der Viskosität beträgt, die bei vollständiger Quellung der Celluloseether-Lösung gemessen wird, in dieser Lösung den Entschäumerwirkstoff dispergiert und nach Zusatz des Trägersalzes und gegebenenfalls Waser die homogenisierte Dispersion sprühtrocknet, dadurch gekennzeichnet, daß das Trägersalz zu 0 Gew.-% bis 5 Gew.-% aus Alkalisilikat und zu 95 Gew.-% bis 100 Gew.-% aus Alkalisulfat besteht.

11. Verfahren nach Anspruch 10, dadurch gekennzeichnet, daß man die Konzentration der Celluloseetherlösung auf 3 bis 6 g/l einstellt, die Dispersion vor dem Versprühen auf eine Temperatur von 50 bis 95 °C erwärmt und das Granulat durch Heißsprühtrocknung auf einen Wassergehalt von 3 Gew.-% bis 10 Gew.-%, insbesondere 3,5 Gew.-% bis 7,5 Gew.-%, trocknet.

## Claims

1. Pourable defoamer granules containing 7.5% by weight to 18% by weight of a water-insoluble defoaming agent, 0.2% by weight to 3% by weight of a mixture of alkali metal carboxymethyl cellulose and nonionic cellulose ether in a ratio by weight of 80:20 to 40:60, 70% by weight to 90% by weight of inorganic, phosphate-free water-soluble carrier salt and water to 100% by weight, characterized in that 0% by weight to 5% by weight of the inorganic carrier salt consists of alkali metal silicate, more particularly sodium silicate, and 95% by weight to 100% by weight of alkali metal sulfate, more particularly sodium sulfate.

2. Defoamer granules as claimed in claim 1, characterized in that the defoaming agent is an organopolysiloxane, a paraffin or a mixture thereof.

3. Defoamer granules as claimed in claim 1 or 2, characterized in that the defoaming agent is an organopolysiloxane containing hydrophobicized silica.

4. Defoamer granules as claimed in claim 1 or 2, characterized in that the defoaming agent contains a paraffin with a content of 2% by weight to 30% by weight and, more particularly, 5% by weight to 20% by weight, based on paraffin, of fatty acid bis-amide.

5. Defoamer granules as claimed in claim 4, characterized in that the paraffin has a solidification point of 30°C to 90°C.

6. Defoamer granules as claimed in claim 4 or 5, characterized in that the paraffin has a liquid content at 30°C of less than 10% by weight and, more particularly, from 2% by weight to 5% by weight, a liquid content at 40°C of less than 30% by weight and, more particularly, from 5% by weight to 25% by weight, a liquid content at 60°C of from 30% by weight to 60% by weight and, more particularly, from 40% by weight to 55% by weight, a liquid content at 80°C of from 80% by weight to 100% by weight and a liquid content at 90°C of 100% by weight.

7. Defoamer granules as claimed in any of claims 1 to 6, characterized in that the content of defoaming agent is from 8% by weight to 16% by weight and, more particularly, from 10% by weight to 15% by weight.

8. Defoamer granules as claimed in any of claims 1 to 6, characterized in that the content of carrier material is from 72% by weight to 88% by weight and, more particularly, from 75% by weight to 85% by weight.

9. Defoamer granules as claimed in any of claims 1 to 8, characterized in that the inorganic carrier salt consists of alkali metal sulfate.

10. A process for producing pourable defoamer granules containing 7.5% by weight to 18% by weight of a water-insoluble defoaming agent, 0.2% by weight to 3% by weight of a mixture of alkali metal carboxymethyl cellulose and nonionic cellulose ether in a ratio by weight of 80:20 to 40:60, 70% by weight to 90% by weight of inorganic, phosphate-free water-soluble carrier salt and water to 100% by weight, in which an aqueous solution containing 2 to 8% by weight of the cellulose ether mixture is allowed to swell at a temperature of 15°C to 60°C until the viscosity of the solution is at least 60% of the viscosity which is measured after complete swelling of the cellulose ether solution, the defoaming agent is dispersed in the solution and, after addition of the carrier salt and optionally water, the homogenized dispersion is spray-dried, characterized in that 0% by weight to 5% by weight of the carrier salt consists of alkali metal silicate and 95% by weight to 100% by weight of alkali metal sulfate.

11. A process as claimed in claim 10, characterized in that the concentration of the cellulose ether solution is adjusted to 3 to 6 g/l, the dispersion is heated to a temperature of 50 to 95°C before spraying and the granules are dried by hot spray drying to a water content of 3% by weight to 10% by weight and, more particularly, 3.5% by weight to 7.5% by weight.

## Revendications

1. Granulé d'agent antimousse déversable, qui contient 7,5 à 18 % en poids d'une substance active d'agent antimousse insoluble dans l'eau, 0,2 à 3 % en poids d'un mélange de carboxyméthylcellulose de métal alcalin et d'éther cellulosique non ionique, dans un rapport pondéral de 80:20 à 40:60, 70 à 90 % en poids d'un sel porteur inorganique, sans phosphates, soluble dans l'eau, ainsi que de l'eau pour obtenir 100 % en poids, caractérisé en ce que le sel porteur inorganique est constitué à raison de 0 à 5 % en poids de silicate de métal alcalin, en particulier de silicate de sodium, et à concurrence de 95 à 100 % en poids, de sulfate de métal alcalin, en particulier de sulfate de sodium.

2. Granulé d'agent antimousse selon la revendication 1, caractérisé en ce que la substance active d'agent antimousse est un organopolysiloxane, une paraffine ou un mélange de ceux-ci.

3. Granulé d'agent antimousse selon la revendication 1 ou 2, caractérisé en ce que la substance active d'agent antimousse est un organopolysiloxane contenant de l'acide silicique hydrophobé.

4. Granulé d'agent antimousse selon la revendication 1 ou 2, caractérisé en ce que la substance active d'agent antimousse est une paraffine contenant 2 à 30, en particulier 5 à 20 % en poids (par rapport à la paraffine) de bisamide d'acide gras.

5. Granulé d'agent antimousse selon la revendication 4, caractérisé en ce que la paraffine possède un point de solidification dans l'intervalle de 30 à 90 °C.

6. Granulé d'agent antimousse selon la revendication 4 ou 5, caractérisé en ce que la paraffine présente à 30 °C, une fraction liquide inférieure à 10 % en poids, en particulier comprise entre 2 et 5 % en poids, à 40 °C, une fraction liquide inférieure à 30 % en poids, de préférence comprise entre 5 et 25 % en poids, à 60 °C, une fraction liquide de 30 à 60 % en poids, en particulier de 40 à 55 % en poids, à 80 °C, une fraction liquide de 80 à 100 % en poids et à 90 °C, une fraction liquide de 100 % en poids.

7. Granulé d'agent antimousse selon une des revendications 1 à 6, caractérisé en ce que la concentration en substance active d'agent antimousse atteint 8 à 16, en particulier 10 à 15 % en poids.

8. Granulé d'agent antimousse selon une des revendications 1 à 6, caractérisé en ce que la concentration en matière porteuse atteint 72 à 88 et en particulier 75 à 85 % en poids.

9. Granulé d'agent antimousse selon une des revendications 1 à 8, caractérisé en ce que le sel porteur inorganique est constitué de sulfate de métal alcalin.

10. Procédé de préparation d'un granulé d'agent antimousse déversable, contenant 7,5 à 18 % en poids d'une substance active d'agent antimousse insoluble dans l'eau, 0,2 à 3 % en poids d'un mélange de carboxyméthylcellulose de métal alcalin et d'éther cellulosique non ionique, dans un rapport pondéral de 80:20 à 40:60, 70 à 90 % en poids d'un sel porteur inorganique, sans phosphates, soluble dans l'eau, ainsi que de l'eau comme reste, dans lequel on laisse gonfler une solution aqueuse renfermant 2 à 8 % en poids du mélange d'éthers cellulosiques à une température de 15 à 60 °C jusqu'à ce que la viscosité de la solution atteigne au moins 60 % de celle qui est déterminée en cas de gonflement complet de la solution d'éthers cellulosiques, on disperse dans cette solution la substance active d'agent antimousse et on sèche par pulvérisation la dispersion homogénéisée après adjonction du sel porteur et le cas échéant d'eau, caractérisé en ce que le sel porteur est constitué à raison de 0 à 5 % en poids de silicate de métal alcalin et à concurrence de 95 à 100 % en poids, de sulfate de métal alcalin.

11. Procédé de préparation selon la revendication 11, caractérisé en ce que l'on ajuste la concentration de la solution d'éthers cellulosiques entre 3 et 6 g/l, on chauffe la dispersion avant la pulvérisation à une température de 50 à 95°C et on sèche le granulé par séchage par pulvérisation à chaud jusqu'à une teneur en eau de 3 à 10, de préférence de 3,5 à 7,5 % en poids.
